# EUROPÄISCHE PATENTSCHRIFT

(11) **EP 3 093 223 B1**
(45) Veröffentlichungstag und Bekanntmachung des Hinweises auf die Patenterteilung: **20.06.2018**
(21) Anmeldenummer: 16000639.1
(22) Anmeldetag: 16.03.2016
(51) Int. Cl.: B62D 35/00

(54) **FAHRZEUG-GESPANN AUS ZUGFAHRZEUG UND ANHÄNGE-FAHRZEUG, INSBESONDERE SATTELAUFLIEGER**
VEHICLE COMBINATION CONSISTING OF A TRACTION VEHICLE AND TRAILING VEHICLE, IN PARTICULAR A SEMI-TRAILER
ATTELAGE DE VEHICULE COMPRENANT UN VEHICULE DE TRACTION ET UN VEHICULE REMORQUE, EN PARTICULIER SEMI-REMORQUE

(30) Priorität: 06.05.2015 DE 102015005849
(43) Veröffentlichungstag der Anmeldung: 16.11.2016
(73) Patentinhaber: WABCO Europe BVBA, 1170 Brüssel (BE)
(72) Erfinder: Dieckmann, Thomas, 30982 Pattensen (DE); Nouwens, Jesse, 3011VN Rotterdam (NL); Van Raemdonck, Gandert Marcel Rita, 2611 PW Delft (NL)
(74) Vertreter: Lauerwald, Jörg

(56) Entgegenhaltungen:
- WO-A2-2006/115988
- DE-A1-102005 024 567
- DE-A1-102010 006 189
- US-A1- 2014 319 871
- US-B1- 6 932 419

## Beschreibung

Die Erfindung betrifft ein Fahrzeug-Gespann aus einem Zugfahrzeug und einem Anhänge-Fahrzeug, insbesondere einem Sattelauflieger.

Aus der WO 2014/163555 A1 ist ein derartiges Fahrzeug-Gespann bekannt. An den Seitenflächen des zweiachsigen Zugfahrzeugs zwischen dessen Vorderachse und Hinterachse erstreckt sich eine Seitenverkleidung von der Fahrzeugstruktur nach unten zur Fahrbahn hin. Ein vorderer Endbereich des Sattelaufliegers liegt um eine Hochachse schwenkbar auf der Fahrzeugstruktur des Zugfahrzeugs auf. Zwischen der Fahrzeugstruktur des Zugfahrzeugs und dem Sattelauflieger ist ein Horizontalspalt gebildet; weiterhin ist ein vorderes Ende des Sattelaufliegers von dem Zugfahrzeug durch einen Längsspalt beabstandet. Bei Kurvenfahrten schwenkt der Sattelauflieger gegenüber dem Zugfahrzeug, so dass der Horizontalspalt und der Längsspalt eine Verstellbarkeit und Manövrierfähigkeit zulassen.

Die WO 2014/163555 A1 schlägt hierbei vor, den Horizontalspalt teilweise durch ein verstellbares Element zu verschließen. Das verstellbare Element wird durch einen elektrischen Motor nach oben in seine Arbeitsposition verstellt, um den Horizontalspalt weitgehend zu verschließen, und entsprechend von der ausgefahrenen Arbeitsposition wieder nach unten einzufahren.

Durch eine derartige Abdeckung können aerodynamischen Eigenschaften bereits verbessert werden. Eine derartige Vorrichtung ist jedoch relativ aufwendig und kostspielig.

Der Erfindung liegt die Aufgabe zu Grunde, ein Fahrzeug-Gespann dahingehend auszubilden, dass mit relativ geringem Aufwand gute aerodynamische Eigenschaften erreichbar sind. Weitere ähnliche Fahrzeuge sind von DE102005024567 und US2014319871 bekannt. Diese Aufgabe wird durch ein Fahrzeug-Gespann nach Anspruch 1 gelöst. Die Unteransprüche beschreiben bevorzugte Weiterbildungen. Weiterhin ist eine aerodynamische Zusatzeinrichtung zur Anbringung an einem Sattelauflieger vorgesehen, um ein derartiges Fahrzeug-Gespann auszubilden.

Somit ist an dem Anhängefahrzeug, insbesondere Sattelauflieger, eine flexible, elastische Spaltabdeckung angebracht, die sich von ihrer Anbindung an dem Anhängefahrzeug aus vertikal nach unten erstreckt und den Horizontalspalt zumindest weitgehend, vorzugsweise ganz verschließt.

Die flexible, elastische Spaltabdeckung ist fest, d. h. nicht verfahrbar oder verstellbar, an dem Anhänge-Fahrzeug befestigt; sie kann sich aufgrund ihrer flexiblen und elastischen Ausbildung, z. B. aus Gummi oder einem elastischen Kunststoff als Material, an ihrer unteren Kante biegen; eine derartige elastische Biegung der flexiblen, elastischen Spaltabdeckung stellt somit keine Verstellbarkeit entsprechend der WO 2014/163555 A1 dar.

Der Erfindung liegt der Gedanke zu Grunde, durch eine starre Befestigung der flexiblen, elastischen Spaltabdeckung an dem Anhänge-Fahrzeug eine Abdichtung zu gewährleisten, die den Horizontalspalt verschließen kann und dennoch Schwenkvorgänge des Anhänge-Fahrzeugs gegenüber dem Zugfahrzeug nicht behindert und hierdurch nicht beschädigt wird, sondern eine selbsttätige Rückstellbarkeit nach den Schwenkvorgängen ermöglicht.

So wird der vordere Endbereich des Sattelaufliegers bei einem Schwenkvorgang um seine (im Allgemeinen durch den Königszapfen definierte) GierAchse bzw. Hochachse gegenüber dem Zugfahrzeug ausschwenken, so dass die flexible, elastische Spaltabdeckung in Kontakt mit dem Zugfahrzeug kommt oder kommen kann und z. B. auf diesem schleift; bei flexibler, elastischer Ausbildung des Materials wird hierdurch jedoch weder an der flexiblen, elastischen Spaltabdeckung noch an den Zugfahrzeug bzw. der Fahrzeugstruktur des Zugfahrzeugs eine Beschädigung verursacht. Nach dem Rückschwenkvorgang, d.h. bei Kurvenende und Geradeausfahrt, stellt die flexible, elastische Spaltabdeckung ihren Ausgangszustand wieder ein.

Die flexible, elastische Spaltabdeckung kann insbesondere an einer Anhänge-Fahrzugstruktur des Sattelaufliegers befestigt werden. Die Befestigung kann z. B. durch Klebung aber auch durch Hilfsmittel wie Schrauben, Nieten usw. erfolgen. Eine Klebung kann zum einen von außen als Klebeband an die flexible, elastische Spaltabdeckung und die Fahrzeugstruktur angebracht werden; alternativ hierzu kann eine beidseitige Klebeschicht zwischen die flexible, elastische Spaltabdeckung und die Anhänge-Fahrzeugstruktur des Sattelaufliegers eingebracht werden.

Die flexible, elastische Spaltabdeckung kann an der Seitenfläche und/oder an dem vorderen Ende des Anhängefahrzeugs angebracht sein und den Horizontalspalt entsprechend zu den Seiten und/oder nach vorne hin verschließen. An den Seitenflächen kann die flexible, elastische Spaltabdeckung jeweils insbesondere über den Horizontalspalt hinweg nach unten überstehen, d. h. eine freie Länge aufweisen, die größer als die Spalthöhe des Horizontalspaltes ist. Bei einer derartigen Ausbildung liegt somit die seitliche flexible, elastische Spaltabdeckung seitlich an dem Zugfahrzeug, insbesondere dessen Seitenverkleidung, an. Messungen haben gezeigt, dass ein derartiges Anliegen bzw. die sich hierdurch bildende Kante der flexiblen Seitenabdeckung unproblematisch sind; es wird bei einer Anlage der flexiblen, elastischen Spaltabdeckung an der Seitenverkleidung eine flächige Anlage und sehr dichte Anordnung geschaffen, die eine Wirbelausbildung in dem Horizontalspalt in diesen seitlichen Bereichen sehr gut unterdrückt. Weiterhin ist jedoch auch ein seitlicher bündiger Abschluss, d. h. ohne Überlapp, möglich.

Eine am vorderen Ende des Sattelaufliegers angebrachte flexible, elastische Spaltabdeckung dichtet den Horizontalspalt entsprechend nach vorne, d.h. zu dem Längsspalt zwischen Zugfahrzeug und Anhängefahrzeug hin ab. Dies kann insbesondere mit bündigem Abschluss der unteren Kante der Spaltabdeckung an der Gegenfläche des Zugfahrzeugs, d. h. insbesondere einer Zugfahrzeug-Struktur des Zugfahrzeuges erfolgen. Grundsätzlich ist jedoch ein leichter Überlapp, d. h. ein Aufliegen der Spaltabdeckung, möglich.

Es wird hierbei auch erkannt, dass ein Überlapp oder Überstand der flexiblen, elastischen Spaltabdeckung unproblematisch ist: bei einer Kurvenfahrt schwenkt die kurvenäußere seitliche Spaltabdeckung nach außen; die kurveninnere Spaltabdeckung wird in ihrem unteren Bereich etwas nach außen aufgebogen, schleift ohne Beschädigung auf der Gegenfläche des Zugfahrzeugs und wird bei dem Rückstellvorgang zur Geradeausfahrt wieder entsprechend rausgeschoben.

Als geeignetes Material für die flexible, elastische Spaltabdeckung kann insbesondere ein Gummimaterial, insbesondere eine plane Gummimatte mit geeignetem Zuschnitt, gewählt werden. Alternativ hierzu ist auch ein elastischer Kunststoff möglich.

Vorteilhafterweise verschließt die Spaltabdeckung aufgrund der Eigensteifigkeit ihres Materials auch bei einer Belastung bei einer Fahrt durch den Fahrtwind, z. B. bis zu einer Fahrgeschwindigkeit von 100 km/h, weiterhin den Horizontalspalt, d.h. eine Biegung durch die angreifenden Kräfte beeinträchtigt nicht ihre Funktionalität.

Ein weiterer Vorteil liegt darin, dass die von ihrer Befestigung herab hängende Spaltabdeckung bereits aufgrund ihrer Schwerkraft jeweils in ihre Grundstellung bzw. abdichtende Stellung gezogen wird, d.h. die Funktionalität der Abdichtung ist schwerkraftunterstützt.

Die seitliche und vordere flexible, elastische Spaltabdeckung können alternativ oder kombiniert angebracht werden. Bei einer kombinierten Ausbildung, d. h. insbesondere einer U-förmigen Spaltabdeckung, können die seitlichen flexiblen, elastischen Spaltabdeckungen und die vorderen flexiblen, elastischen Spaltabdeckungen getrennt sein, d. h. sie gehen nicht direkt ineinander über, um ein Aufbiegen in den Kurven und somit eine Verstellbarkeit auch in den Eckbereichen zu ermöglichen; alternativ hierzu können die seitlichen Spaltabdeckungen jedoch auch ohne Unterteilung direkt in die vordere Spaltabdeckung übergehen, wodurch die Steifigkeit des Materials in den Ecken des Anhängefahrzeuges erhöht wird.

Insbesondere durch diese kombinierte Ausbildung mit seitlicher und vorderer Spaltabdichtung kann somit der Horizontalspalt sehr gut in einer U-Form abgedichtet werden, so dass Verwirbelungen aufgrund von Druckdifferenzen zwischen Horizontalspalt und Außenraum während der Fahrt sehr wirksam unterbunden werden können.

Somit wird erfindungsgemäß eine aerodynamische Zusatzeinrichtung geschaffen, die nachträglich ohne großen Aufwand an einem Sattelauflieger anzubringen ist, um ein Fahrzeug-Gespann mit guten aerodynamischen Eigenschaften auszubilden.

Gegenüber dem eingangs genannten herkömmlichen, mechanisch verstellbaren System wird somit eine sehr kostengünstige Ausbildung erreicht. Es zeigt sich auch, dass es vorteilhafter ist, den Horizontalspalt nach vorne zu einem Freiraum zwischen Fahrerkabine und Anhänger durch die sich in Querrichtung des Fahrzeugs erstreckende vordere Spaltabdichtung abzudichten, statt wie in dem eingangs genannten System den Freiraum in seinem unteren Bereich seitlich abzudichten.

Die Erfindung wird im Folgenden anhand der beiliegenden Zeichnungen an einigen Ausführungsformen näher erläutert. Es zeigen:
- Fig. 1: ein Fahrzeug-Gespann gemäß einer Ausführungsform in Seitenansicht, mit ergänzender Ausschnittsvergrößerung;
- Fig. 2: eine Seitenansicht des vorderes Bereichs eines Fahrzeug-Gespanns gemäß einer weiteren Ausführungsform mit bündigem unteren Abschluss der Abdeckung; und
- Fig. 3: eine perspektivische Ansicht eines Fahrzeug-Gespanns gemäß einer weiteren Ausführungsform.

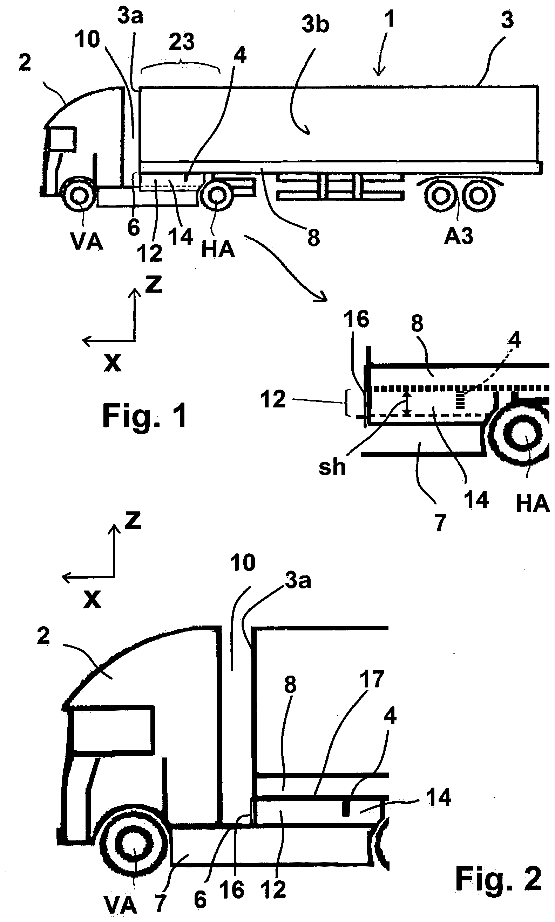

Ein Fahrzeug-Gespann 1 wird gebildet durch ein Zugfahrzeug 2 und einen Sattelauflieger 3. Das Zugfahrzeug 2 weist eine Vorderachse VA und eine Hinterachse HA auf; der Sattelauflieger (semi-trailer) weist hier eine TandemAchse A3 auf und ist auf dem Zugfahrzeug 2 in einem den Drehpunkt um eine Gierachse bestimmenden Königszapfen 4 - der in Figur 1 und 2 schematisiert eingezeichnet ist - gelenkig aufgenommen. Es bildet sich somit in Längsrichtung x ein Überlappbereich 23 zwischen den Fahrzeugen 2, 3.

Das Zugfahrzeug 2 weist eine sich zwischen der Vorderachse VA und der Hinterachse HA erstreckende Zugfahrzeug-Struktur 6 auf, an der eine Seitenverkleidung 7 aus z. B. einem Kunststoff-Material befestigt ist, die sich von der Zugfahrzeug-Struktur 6 vertikal nach unten, vorzugsweise bis kurz oberhalb einer Fahrbahn 8 und mit gewissem Spalt zur Fahrbahn 8, erstreckt. Die Seitenverkleidung 7 erstreckt sich hierbei insbesondere zwischen Vorderachse VA und Hinterachse HA und dient der Verbesserung der aerodynamischen Verhältnisse, d. h. der Verringerung des Luftwiderstandes.

Der Sattelauflieger 3 weist eine Anhänge-Fahrzeugstruktur 8 auf, die sich von seinem vorderen Ende 3a aus nach hinten erstreckt.

Zwischen dem vorderen Ende 3a des Sattelaufliegers 3 und dem Zugfahrzeug 2 ist ein Freiraum 10 ausgebildet, der insbesondere der Manövrierfähigkeit bzw. dem Schwenkvorgang des vorderen Endes 3a des Sattelaufliegers 3 in einer Kurvenfahrt dient. Weiterhin ist zwischen der Anhänge-Fahrzeugstruktur 8 und der Zugfahrzeug-Struktur 6 ein Horizontalspalt 12 ausgebildet, der wiederum Einschwenkvorgängen bei einer Kurvenfahrt und unterschiedliche Einfedervorgänge des Zugfahrzeugs 2 und des Sattelaufliegers 3 ermöglicht.

Der Horizontalspalt 12 wird an den beiden Seitenflächen 3b und/oder an dem vorderen Ende 3a des Sattelaufliegers 3 durch eine flexible, elastische Spaltabdichtung 14, 16 nach außen bzw. zum Außenraum hin abgedichtet.

Bei der Ausführungsform der Figur 1 ist an der ersichtlichen linken Fahrzeugseite der Anhänge-Fahrzeugstruktur 8 eine seitliche flexible, elastische Spaltabdichtung 14 angebracht, die sich nach unten über den Horizontalspalt 12 erstreckt, hierdurch den Horizontalspalt 12 abdeckt und seitlich an der Zugfahrzeug-Struktur 6 bzw. der Seitenverkleidung 7 des Zugfahrzeugs 2 anliegt. Die seitliche flexible, elastische Spaltabdichtung 14 ist in einer als Befestigungsmittel dienenden Klebeschicht 17, ggf. auch durch Schrauben, Nieten oder andere Befestigungsmittel, an der Anhänge-Fahrzeugstruktur 8 befestigt.

Somit ist der Horizontalspalt 12 zur Seite bzw. seitlich sicher abgedichtet. Es wird hierbei erkannt, dass der Überlapp der seitlichen flexiblen, elastischen Spaltabdichtung 14 über dem Horizontalspalt 12 nach unten unproblematisch ist und keine relevanten Verwirbelungen hervorruft. Da die Seitenfläche 3b des Sattelaufliegers 3 und die Seitenverkleidung 7 des Zugfahrzeugs 2 etwa auf einer Ebene liegen, liegt entsprechend auch die seitliche flexible, elastische Spaltabdeckung 14 in ihrem Überlappungsbereich an der Seitenverkleidung 7 an, d. h. flattert entsprechend auch nicht. Die seitliche flexible, elastische Spaltenabdeckung 14 kann insbesondere aus einem hinreichend steifen Gummimaterial, d. h. als Gummischicht bzw. Gummischeibe, z. B. mit einer Dicke von 2 - 4 mm, z. B. etwa 3mm, ausgebildet sein.

Die Klebeschicht 17 kann z. B. als Klebeband von außen auf sowohl die seitliche flexible, elastische Spaltabdeckung 14 als auch die Anhänge-Fahrzeugstruktur 8 bzw. Seitenfläche 3b des Sattelaufliegers 3 aufgeklebt werden, oder beidseitig klebend zwischen der Anhänge-Fahrzeugstruktur 8 und der seitlichen flexiblen, elastischen Spaltabdichtung 14 angebracht sein.

Gemäß der Ausführungsform der Figur 2 schließt die seitliche flexible Spaltabdeckung 14 bündig zur Zugfahrzeug-Struktur 6 hin ab, d. h. ohne Überlapp. Es wird hierbei erkannt, dass ein technisch bedingt verbleibender Restspalt vernachlässigbar ist.

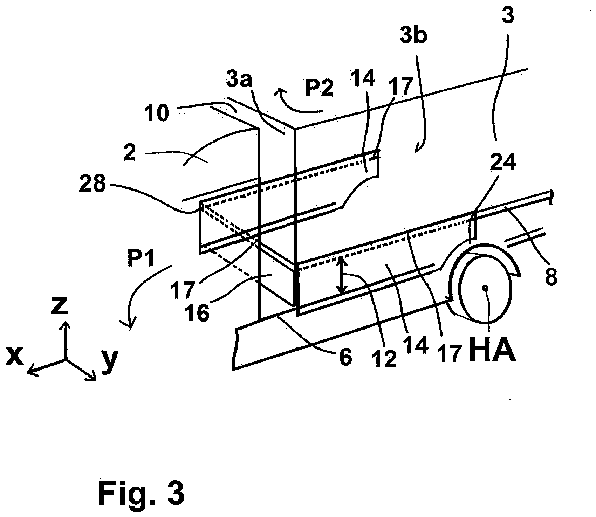

Wie bereits aus Figur 2 ersichtlich, und ergänzend insbesondere auch in Figur 3 gezeigt, kann insbesondere die vordere flexible Spaltabdeckung 16 am vorderen Ende 3a des Sattelaufliegers 3 bündig gegenüber der Zugfahrzeug-Struktur 6 abschließen, d. h. den Horizontalspalt 12 schließen.

Bei einer Kurvenfahrt, z. B. der in Figur 3 durch die Pfeile P1 und P2 angedeuteten Linkskurve des Fahrzeug-Gespanns 1, schwenkt somit der Sattelauflieger 3 gegenüber dem Zugfahrzeug 2; in der in Figur 3 angedeuteten Linkskurve schwenkt das vordere Ende 3a des Sattelaufliegers 3 gegenüber dem Zugfahrzeug 2 nach rechts weg (Pfeil P2). Somit wird die seitliche flexible Spaltabdeckung 14 an der kurveninneren linken Seite vorne an ihrem unteren Ende 14a etwas elastisch aufgebogen und wandert über die Oberseite der Zugfahrzeug-Struktur 6, was jedoch unproblematisch ist und keine Beschädigung oder Verschleiß hervorruft. Beim Zurückschwenken nimmt die seitliche flexible, elastische Spaltabdeckung 14 wiederum ihre Grundstellung, z. B. gemäß Figur 1 und 3 mit dem Überlapp über die Seitenverkleidung 7, ein. Eine Rechtskurve ist für die linksseitige flexible, elastische Spaltabdeckung 14 ohnehin unproblematisch. Entsprechendes gilt für die rechte Seite und die rechte flexible, elastische Spaltabdeckung. Da der Königszapfen 4 wie gezeigt in Längsrichtung x innerhalb des Überlappbereichs 23 angeordnet ist, wird z. B. in einer Linkskurve die linke seitliche flexible, elastische Spaltabdeckung 14 vorne nach innen verstellt und hinten nach außen; sämtliche Verstellungen sind jedoch unproblematisch.

Im Bereich eines Radausschnitts 24 der Hinterachse HA des Zugfahrzeugs 2 ist die seitliche flexible Spaltabdeckung 14, soweit sie entsprechend weit nach hinten bezogen ist, entsprechend der Formgebung des Radausschnittes ausgespart. Grundsätzlich kann die seitliche flexible Spaltabdeckung 14 auch weiter nach hinten gezogen werden.

Die beiden seitlichen flexiblen, elastischen Spaltabdeckungen 14, die vordere flexible, elastische Spaltabdeckung 16 und ihre Befestigungsmittel 17, d.h. z. B. Klebeschichten oder mechanische Befestigungsmittel, bilden somit eine aerodynamische Zusatzeinrichtung 28 zur Anbringung an dem Fahrzeug-Gespann 1 in einer U-Form, insbesondere mit aneinander grenzenden oder in einander übergehenden Spaltabdeckungen 14, 16.

### Bezugszeichenliste (Bestandteil der Beschreibung)

- 1: Fahrzeug-Gespann
- 2: Zugfahrzeug
- 3: Sattelauflieger
- 3a: vorderes Ende des Sattelaufliegers 3
- 3b: Seitenflächen des Sattelaufliegers 3
- 4: Königszapfen
- 6: Zugfahrzeug-Struktur des Zugfahrzeugs 2
- 7: Seitenverkleidung des Zugfahrzeugs 2
- 8: Anhänge-Fahrzeugstruktur des Sattelaufliegers 3
- 10: Freiraum zwischen Zugfahrzeug 2 und Sattelauflieger 3
- 12: Horizontalspalt zwischen der Zugfahrzeug-Struktur 6 und der Anhänge-Fahrzeugstruktur 8
- 14: seitliche flexible, elastische Spaltabdichtung
- 14a: untere Kante von 14
- 16: vordere flexible, elastische Spaltabdichtung
- 16a: untere Kante von 16
- 17: Befestigungsmittel, insbesondere Klebeschicht
- 23: Überlappbereich zwischen den Fahrzeugen 2, 3
- 24: Radausschnitt
- 28: Aerodynamische Zusatzeinrichtung

- x,y,z: Längs-, Quer-, Hochrichtung bzw. -achse
- VA: Vorderachse des Zugfahrzeugs 2
- HA: Hinterachse des Zugfahrzeugs 2
- A3: Tandemachse des Anhängefahrzeugs 3
- Sh: Spalthöhe des Horizontalspaltes

## Patentansprüche

1. Fahrzeug-Gespann (1) mit einem Zugfahrzeug (2) und einem Anhänge-Fahrzeug (3),
wobei das Zugfahrzeug (2) eine Zugfahrzeug-Struktur (6) und das Anhänge-Fahrzeug (3) eine Anhänge-Fahrzeugstruktur (8) aufweist und die Anhänge-Fahrzeugstruktur (8) in ihrem vorderen Endbereich (3a) vertikal oberhalb der Zugfahrzeug-Struktur (6) angeordnet ist unter Ausbildung eines Horizontalspaltes (12) zwischen den Fahrzeugstrukturen (6, 8) oder den Fahrzeugen (2, 3),
wobei eine Spaltabdeckung (14, 16) zur zumindest teilweisen Abdeckung des Horizontalspaltes (12) vorgesehen ist,
wobei
die Spaltabdeckung (14, 16) eine an dem Anhänge-Fahrzeug (3) angebrachte flexible, elastische Spaltabdeckung (14, 16) ist, die sich von dem Anhänge-Fahrzeug (3) vertikal nach unten erstreckt,
**dadurch gekennzeichnet,**
**dass** an einer linken und/oder rechten Seitenfläche (3b) des Anhängefahrzeugs (3) eine seitliche flexible, elastische Spaltabdeckung (14) angebracht ist und den Horizontalspalt (12) zur Seite hin abdeckt,
wobei
die seitliche flexible, elastische Spaltabdeckung (14) sich über den Horizontalspalt (12) hinaus vertikal nach unten erstreckt und seitlich an dem Zugfahrzeug (2), insbesondere dessen Seitenverkleidung (7) und/oder Zugfahrzeug-Fahrzeugstruktur (16), anliegt.

2. Fahrzeug-Gespann (1) nach Anspruch 1, **dadurch gekennzeichnet, dass** die flexible, elastische Spaltabdeckung (14, 15) den Horizontalspalt (12) vollständig abdeckt.

3. Fahrzeug-Gespann (1) nach Anspruch 1 oder 2, **dadurch gekennzeichnet, dass** die flexible, elastische Spaltabdeckung (14, 15) zumindest bei gerader Ausrichtung des Fahrzeugs-Gespanns (1) das Zugfahrzeug (2), insbesondere eine Seitenverkleidung (7) des Zugfahrzeugs (2), kontaktiert.

4. Fahrzeug-Gespann (1) nach einem der vorherigen Ansprüche, **dadurch gekennzeichnet, dass** die flexible, elastische Spaltabdeckung (14, 15) an der Anhänge-Fahrzeugstruktur (8) des Anhänge-Fahrzeugs (3) befestigt ist.

5. Fahrzeug-Gespann (1) nach einem der vorherigen Ansprüche, **dadurch gekennzeichnet, dass** das Anhänge-Fahrzeug ein Sattelauflieger (3) ist, der zumindest teilweise durch das Zugfahrzeug (2) getragen ist.

6. Fahrzeug-Gespann (1) nach einem der vorherigen Ansprüche, **dadurch gekennzeichnet, dass** die flexible, elastische Spaltabdeckung (14, 16) bei einer Kurvenfahrt mit relativer Verdrehung des Anhänge-Fahrzeug (3) gegenüber dem Zugfahrzeug (2) auf dem Zugfahrzeug (2), insbesondere dessen Zugfahrzeug -Fahrzeugstruktur (6), schleifbar ist.

7. Fahrzeug-Gespann (1) nach Anspruch 1, **dadurch gekennzeichnet, dass** die seitliche flexible, elastische Spaltabdeckung (14) bündig oder mit ihrer unteren Kante (14a) an dem Zugfahrzeug (2) abschließt.

8. Fahrzeug-Gespann (1) nach einem der Ansprüche 1 oder 2, **dadurch gekennzeichnet, dass** die seitliche flexible, elastische Spaltabdeckung (14) im Bereich eines Radkastens oder Radausschnitts (24) einer Hinterachse (HA) des Zugfahrzeugs (2) ausgespart ist.

9. Fahrzeug-Gespann (1) nach einem der vorherigen Ansprüche, **dadurch gekennzeichnet, dass** an einem vorderen Ende (3a) des Anhängefahrzeugs (3) eine vordere flexible, elastische Spaltabdeckung (16) vorgesehen ist, die den Horizontalspalt (12) nach vorne zu einem zwischen dem Zugfahrzeug (2) und dem Anhängefahrzeug (3) ausgebildeten Längsspalt (10) hin abdeckt.

10. Fahrzeug-Gespann (1) nach Anspruch 9, **dadurch gekennzeichnet, dass** der Horizontalspalt (12) U-Förmig nach vorne und seitlich durch flexible, elastische Spaltabdeckungen (14, 16) abgedeckt ist, die eine U-förmige aerodynamische Zusatzeinrichtung an dem Anhängefahrzeug (3) ausbilden.

11. Fahrzeug-Gespann (1) nach einem der vorhergehenden Ansprüche, **dadurch gekennzeichnet, dass** jede flexible, elastische Spaltabdeckung (14, 16) durch ein oder mehrere plane flexible, elastische Zuschnitte, z.B. Gummimatten oder elastische Kunststoff-Matten, ausgebildet ist.

12. Fahrzeug-Gespann (1) nach einem der vorherigen Ansprüche, **dadurch gekennzeichnet, dass** die flexible, elastische Spaltabdeckung (14, 16) eine derartige Eigensteifigkeit aufweist, dass sie auch bei einer Fahrt mit Fahrtwind, insbesondere mit einer Fahrgeschwindigkeit bis 100 km/h, weiterhin den Horizontalspalt (12) verschließt.

13. Fahrzeug-Gespann (1) nach einem der vorherigen Ansprüche, **dadurch gekennzeichnet, dass** die flexible, elastische Spaltabdeckung (14, 16) an dem Anhänge-Fahrzeug (3) mit einem Befestigungsmittel (17) befestigt ist, das ausgewählt ist aus:
einer Klebung, Klebeschicht und/oder mechanischen Befestigung, z. B. durch Schrauben oder Nieten.

14. Aerodynamische Zusatzeinrichtung (28) zur Ausbildung eines Fahrzeug-Gespanns (1) nach Anspruch 13,
wobei die aerodynamische Zusatzeinrichtung (28) aufweist:
eine vordere flexible, elastische Spaltabdeckung (16) zur Anbringung an einem vorderen Ende (3a) des Sattelaufliegers (3) und Abdeckung einer Vorderseite eines Horizontalspaltes (12) zwischen dem Zugfahrzeug (2) und dem Sattelauflieger (3),
eine linke seitliche flexible, elastische Spaltabdeckung (14) zur Anbringung an einer linken Seitenfläche (3b) des Sattelaufliegers (3) und zur Abdeckung einer linken Seite des Horizontalspaltes (12),
eine rechte seitliche flexible, elastische Spaltabdeckung (14) zur Anbringung an einer rechten Seitenfläche (3b) des Sattelaufliegers (3) und zur Abdeckung einer rechten Seite des Horizontalspaltes (12),
Befestigungsmittel (17) zur Befestigung der vorderen Spaltabdeckung (16) und der beiden seitlichen Spaltabdeckungen (14, 16) an dem Sattelauflieger (3) oberhalb des Horizontalspaltes (12) zur Ausbildung einer U-Form aus aneinandergrenzenden oder in einander übergehenden Spaltabdeckungen (14, 16).

## Claims

1. Vehicle combination (1) having a tractor vehicle (2) and a trailer vehicle (3), the tractor vehicle (2) having a tractor vehicle structure (6) and the trailer vehicle (3) having a trailer vehicle structure (8), and the trailer vehicle structure (8) being arranged in its front end region (3a) vertically above the tractor vehicle structure (6) with the configuration of a horizontal gap (12) between the vehicle structures (6, 8) or the vehicles (2, 3), a gap covering (14, 16) being provided for at least partially covering the horizontal gap (12), the gap covering (14, 16) being a flexible, elastic gap covering (14, 16) which is attached to the trailer vehicle (3) and extends vertically downwards from the trailer vehicle (3), **characterized in that** a lateral flexible, elastic gap covering (14) is attached to a left-hand and/or right-hand side face (3b) of the trailer vehicle (3) and covers the horizontal gap (12) towards the side, the lateral flexible, elastic gap covering (14) extending vertically downwards beyond the horizontal gap (12) and bearing laterally against the tractor vehicle (2), in particular its side trim panel (7) and/or tractor vehicle vehicle structure (16).

2. Vehicle combination (1) according to Claim 1, **characterized in that** the flexible, elastic gap covering (14, 15) covers the horizontal gap (12) completely.

3. Vehicle combination (1) according to Claim 1 or 2, **characterized in that** the flexible, elastic gap covering (14, 15) makes contact with the tractor vehicle (2), in particular with a side trim panel (7) of the tractor vehicle (2), at least in the case of a straight orientation of the vehicle combination (1).

4. Vehicle combination (1) according to one of the preceding claims, **characterized in that** the flexible, elastic gap covering (14, 15) is fastened to the trailer vehicle structure (8) of the trailer vehicle (3) .

5. Vehicle combination (1) according to one of the preceding claims, **characterized in that** the trailer vehicle is a semi-trailer (3) which is supported at least partially by way of the tractor vehicle (2).

6. Vehicle combination (1) according to one of the preceding claims, **characterized in that** the flexible, elastic gap covering (14, 16) can slide on the tractor vehicle (2), in particular its tractor vehicle vehicle structure (6), in the case of driving around a bend with a relative rotation of the trailer vehicle (3) with respect to the tractor vehicle (2).

7. Vehicle combination (1) according to Claim 1, **characterized in that** the lateral flexible, elastic gap covering (14) terminates flush or with its lower edge (14a) on the tractor vehicle (2).

8. Vehicle combination (1) according to either of Claims 1 and 2, **characterized in that** the lateral flexible, elastic gap covering (14) is cut out in the region of a wheelhouse or wheel cut-out (24) of a rear axle (HA) of the tractor vehicle (2).

9. Vehicle combination (1) according to one of the preceding claims, **characterized in that** a front flexible, elastic gap covering (16) is provided at a front end (3a) of the trailer vehicle (3), which gap covering (16) covers the horizontal gap (12) towards the front to form a longitudinal gap (10) which is configured between the tractor vehicle (2) and the trailer vehicle (3).

10. Vehicle combination (1) according to Claim 9, **characterized in that** the horizontal gap (12) is covered in a U-shaped manner towards the front and laterally by way of flexible, elastic gap coverings (14, 16) which configure a U-shaped aerodynamic additional device on the trailer vehicle (3).

11. Vehicle combination (1) according to one of the preceding claims, **characterized in that** each flexible, elastic gap covering (14, 16) is configured by way of one or more planar flexible, elastic blanks, for example rubber mats or elastic plastic mats.

12. Vehicle combination (1) according to one of the preceding claims, **characterized in that** the flexible, elastic gap covering (14, 16) has an inherent rigidity which is such that the said gap covering (14, 16) continues to close the horizontal gap (12) even in the case of driving with a slipstream, in particular at a driving speed of up to 100 km/h.

13. Vehicle combination (1) according to one of the preceding claims, **characterized in that** the flexible, elastic gap covering (14, 16) is fastened to the trailer vehicle (3) by way of a fastening means (17) which is selected from:
an adhesive bond, an adhesive layer and/or a mechanical fastening, for example by way of bolts or rivets.

14. Aerodynamic additional device (28) for configuring a vehicle combination (1) according to Claim 13, the aerodynamic additional device (28) having:
a front flexible, elastic gap covering (16) for attaching to a front end (3a) of the semi-trailer (3) and for covering a front side of a horizontal gap (12) between the tractor vehicle (2) and the semi-trailer (3),
a left-hand lateral flexible, elastic gap covering (14) for attaching to a left-hand side face (3b) of the semi-trailer (3) and for covering a left-hand side of the horizontal gap (12),
a right-hand lateral flexible, elastic gap covering (14) for attaching to a right-hand side face (3b) of the semi-trailer (3) and for covering a right-hand side of the horizontal gap (12),
fastening means (17) for fastening the front gap covering (16) and the two lateral gap coverings (14, 16) to the semi-trailer (3) above the horizontal gap (12) in order to configure a U-shape from gap coverings (14, 16) which adjoin one another or merge into one another.

## Revendications

1. Attelage de véhicule (1) comprenant un véhicule de traction (2) et un véhicule remorque (3),
le véhicule de traction (2) présentant une structure de véhicule de traction (6) et le véhicule remorque (3) présentant une structure de véhicule remorque (8) et la structure de véhicule remorque (8) étant disposée dans sa région d'extrémité avant (3a) verticalement au-dessus de la structure de véhicule de traction (6) en créant un espace horizontal (12) entre les structures de véhicule (6, 8) ou entre les véhicules (2, 3),
un recouvrement d'espace (14, 16) étant prévu pour recouvrir au moins en partie l'espace horizontal (12),
le recouvrement d'espace (14, 16) étant un recouvrement d'espace élastique flexible (14, 16) monté sur le véhicule remorque (3) qui s'étend verticalement vers le bas depuis le véhicule remorque (3),
**caractérisé**
**en ce qu'**un recouvrement d'espace élastique flexible latéral (14) est monté au niveau d'une surface latérale gauche et/ou droite (3b) du véhicule remorque (3) et recouvre l'espace horizontal (12) vers le côté,
le recouvrement d'espace élastique flexible latéral (14) s'étendant verticalement vers le bas au-delà de l'espace horizontal (12) et s'appliquant latéralement contre le véhicule de traction (2), en particulier contre son habillage latéral (7) et/ou contre la structure de véhicule du véhicule de traction (16).

2. Attelage de véhicule (1) selon la revendication 1, **caractérisé en ce que** le recouvrement d'espace élastique flexible (14, 15) recouvre complètement l'espace horizontal (12).

3. Attelage de véhicule (1) selon la revendication 1 ou 2, **caractérisé en ce que** le recouvrement d'espace élastique flexible (14, 15), au moins dans le cas d'une orientation rectiligne de l'attelage de véhicule (1), vient en contact avec le véhicule de traction (2), en particulier avec un habillage latéral (7) du véhicule de traction (2) .

4. Attelage de véhicule (1) selon l'une quelconque des revendications précédentes, **caractérisé en ce que** le recouvrement d'espace élastique flexible (14, 15) est fixé à la structure de véhicule remorque (8) du véhicule remorque (3).

5. Attelage de véhicule (1) selon l'une quelconque des revendications précédentes, **caractérisé en ce que** le véhicule remorque est un semi-remorque (3) qui est porté au moins en partie par le véhicule de traction (2) .

6. Attelage de véhicule (1) selon l'une quelconque des revendications précédentes, **caractérisé en ce que** le recouvrement d'espace élastique flexible (14, 16), dans le cas d'une conduite en virage, avec une rotation relative du véhicule remorque (3) par rapport au véhicule de traction (2), peut glisser sur le véhicule de traction (2), en particulier sur sa structure de véhicule de véhicule de traction (6).

7. Attelage de véhicule (1) selon la revendication 1, **caractérisé en ce que** le recouvrement d'espace élastique flexible latéral (14) se termine en affleurement, ou avec son bord inférieur (14a), contre le véhicule de traction (2).

8. Attelage de véhicule (1) selon l'une quelconque des revendications 1 ou 2, **caractérisé en ce que** le recouvrement d'espace élastique flexible latéral (14) est évidé dans la région d'un passage de roue ou d'une découpe de roue (24) d'un essieu arrière (HA) du véhicule de traction (2).

9. Attelage de véhicule (1) selon l'une quelconque des revendications précédentes, **caractérisé en ce qu'**au niveau d'une extrémité avant (3a) du véhicule remorque (3) est prévu un recouvrement d'espace élastique flexible avant (16) qui recouvre l'espace horizontal (12) vers l'avant vers un espace longitudinal (10) réalisé entre le véhicule de traction (2) et le véhicule remorque (3) .

10. Attelage de véhicule (1) selon la revendication 9, **caractérisé en ce que** l'espace horizontal (12) est recouvert en forme de U vers l'avant et latéralement par des recouvrements d'espace élastiques flexibles (14, 16) qui constituent un dispositif supplémentaire aérodynamique en forme de U sur le véhicule remorque (3).

11. Attelage de véhicule (1) selon l'une quelconque des revendications précédentes, **caractérisé en ce que** chaque recouvrement d'espace élastique flexible (14, 16) est réalisé par une ou plusieurs pièces découpées élastiques flexibles planes, par exemple des tapis en caoutchouc ou des tapis en plastique élastiques.

12. Attelage de véhicule (1) selon l'une quelconque des revendications précédentes, **caractérisé en ce que** le recouvrement d'espace élastique flexible (14, 16) présente une rigidité propre telle qu'il ferme en outre l'espace horizontal (12) même lors d'une conduite avec un vent relatif, en particulier avec une vitesse de conduite allant jusqu'à 100 km/h.

13. Attelage de véhicule (1) selon l'une quelconque des revendications précédentes, **caractérisé en ce que** le recouvrement d'espace élastique flexible (14, 16) est fixé au véhicule remorque (3) avec un moyen de fixation (17) qui est choisi parmi :
un collage, une couche adhésive et/ou une fixation mécanique, par exemple par vissage ou rivetage.

14. Dispositif supplémentaire aérodynamique (28) pour réaliser un attelage de véhicule (1) selon la revendication 13,
dans lequel le dispositif supplémentaire aérodynamique (28) présente :
un recouvrement d'espace élastique flexible avant (16) destiné à être monté sur une extrémité avant (3a) du semi-remorque (3) et à recouvrir un côté avant d'un espace horizontal (12) entre le véhicule de traction (2) et le semi-remorque (3),
un recouvrement d'espace élastique flexible latéral gauche (14) destiné à être monté sur une surface latérale gauche (3b) du semi-remorque (3) et à recouvrir un côté gauche de l'espace horizontal (12),
un recouvrement d'espace élastique flexible latéral droit (14) destiné à être monté sur une surface latérale droite (3b) du semi-remorque (3) et à recouvrir un côté droit de l'espace horizontal (12),
des moyens de fixation (17) pour la fixation du recouvrement d'espace avant (16) et des deux recouvrements d'espace latéraux (14, 16) sur le semi-remorque (3) au-dessus de l'espace horizontal (12) pour réaliser une forme en U constituée de recouvrements d'espace (14, 16) adjacents les uns aux autres ou se prolongeant les uns dans les autres.
